# EUROPÄISCHE PATENTSCHRIFT

(11) **EP 4 416 565 B1**
(45) Veröffentlichungstag und Bekanntmachung des Hinweises auf die Patenterteilung: **15.04.2026**
(21) Anmeldenummer: 22769688.7
(22) Anmeldetag: 30.08.2022
(51) Int. Cl.: G05B 23/02

(54) **WARTUNGSANZEIGE**
MAINTENANCE DISPLAY
INDICATEUR D'ENTRETIEN

(30) Priorität: 12.10.2021 EP 21202049
(43) Veröffentlichungstag der Anmeldung: 21.08.2024
(73) Patentinhaber: CERATIZIT Besigheim GmbH, 74354 Besigheim (DE)
(72) Erfinder: MAIER, Jens, 74354 Besigheim (DE); MÜLLER, Sophie, 74354 Besigheim (DE); DOS SANTOS BATISTA, Daniel, 72186 Empfingen (DE); GELLERT, Kai, 74354 Besigheim (DE); MACK, Markus, 74354 Besigheim (DE)
(74) Vertreter: Ciesla, Dirk
(86) Internationale Anmeldenummer: PCT/EP2022/074003
(87) Internationale Veröffentlichungsnummer: WO 2023/061655

(56) Entgegenhaltungen:
- EP-A1- 3 689 535
- OSTASEVICIUS V ET AL: "Monitoring the condition of the cutting tool using self-powering wireless sensor technologies", THE INTERNATIONAL JOURNAL OF ADVANCED MANUFACTURING TECHNOLOGY, SPRINGER, LONDON, vol. 88, no. 9, 9 June 2016 (2016-06-09), pages 2803 - 2817, XP036151043, ISSN: 0268-3768, [retrieved on 20160609], DOI: 10.1007/S00170-016-8939-Z
- CHANG SHIN-YI ET AL: "Greendicator: Enabling Optical Pulse-Encoded Data Output from WSN for Display on Smartphones", 2014 IEEE INTERNATIONAL CONFERENCE ON INTERNET OF THINGS(ITHINGS), AND IEEE GREEN COMPUTING AND COMMUNICATIONS (GREENCOM) AND IEEE CYBER, PHYSICAL AND SOCIAL COMPUTING (CPSCOM), IEEE, 1 September 2014 (2014-09-01), pages 381 - 388, XP032747615, ISBN: 978-1-4799-5967-9, [retrieved on 20150312], DOI: 10.1109/ITHINGS.2014.70

## Beschreibung

Die vorliegende Erfindung betrifft eine Wartungsanzeige, wobei die Wartungsanzeige eine Informationsbitkette speichert, wobei die Informationsbitkette zumindest einen Abschnitt von einer Wartungsinformation von einem Bauteil eines Zerspanungswerkzeugs binär codiert.

Die EP 3 689 535 A1 zeigt eine Informationsvorrichtung zur Information über den Wartungszustand von einem Zerspanungswerkzeug.

Bei der aus der EP 3 689 535 A1 bekannten Informationsvorrichtung besteht das Bedürfnis, den für die Anzeige der Wartungsinformation verwendeten Bereich flächenmäßig zu reduzieren, so dass die Wartungsinformation auch unter aufseiten eines Zerspanungswerkzeugs beengten oder schlecht zugänglichen Verhältnissen anzeigt werden kann.

OSTASEVICIUS V ET AL: "Monitoring the condition of the cutting tool using self-powering wireless sensor technologies" offenbart eine Maschinenüberwachung mittels eines drahtlosen Sensornetzes.

CHANG SHIN-YI ET AL: "Greendicator: Enabling Optical Pulse-Encoded Data Output from WSN for Display on Smartphones" offenbart eine optische Datenübertragung in einem drahtlosen Sensornetz.

Die Aufgabe der vorliegenden Erfindung besteht darin, eine Wartungsanzeige bereitzustellen, die eine Wartungsinformation platzsparend anzeigt.

Die technische Aufgabe der vorliegenden Erfindung wird gelöst durch den Gegenstand von Anspruch 1. Vorteilhafte Weiterbildungen der Erfindung sind den abhängigen Ansprüchen, der Beschreibung und den Figuren zu entnehmen.

Das Informationssignal kann unter Einhaltung von dem Luftspalt von dem fotosensitiven Element insbesondere dann gefilmt werden, wenn die Wartungsanzeige relativ zu dem fotosensitiven Element, zum Beispiel einer üblichen Handykamera, ausreichend stillsteht, sodass die Informationsbitzustände optisch unterschieden werden können, also unter einer zu schnellen Bewegung von der Wartungsanzeige optisch nicht verschwimmen.

Die Wartungsanzeige überträgt das Informationssignal und damit die Informationsbitkette zeitlich seriell, also einen Informationsbitzustand zeitlich nach dem anderen, indem die Wartungsanzeige den Informationsbitzuständen von der Informationsbitkette folgend blinkt. Der zum Anzeigen des Informationssignals benötigte Bereich wird damit geringgehalten. So reicht für das Anzeigen des Informationssignals bereits ein Leuchtelement aus, welches in Abhängigkeit von den Informationsbitzuständen hin- und hergeschaltet, insbesondere an- und ausgeschaltet, wird, so dass das Leuchtelement bei einem ersten Schaltzustand einen ersten Leuchtzustand hat und bei einem zweiten Schaltzustand einen zweiten Leuchtzustand. Dabei ist es denkbar und auch möglich, dass das Leuchtelement auch dazu verwendet wird, das Ankündigungssignal anzuzeigen, was noch mehr Platz einspart.

Die Wartungsanzeige hat den besonderen Vorteil, dass das Informationssignal von dem fotosensitiven Element, also einem Element, das von Lichtwellen angeregt elektrische Signale erzeugt, gefilmt und so elektronisch decodiert werden kann. Denn dadurch kann der zumindest eine Abschnitt von der Wartungsinformation auf Basis von dem Informationssignal für den Menschen unmittelbar verständlich gemacht werden, so dass er eine Entscheidung fällen kann, ob das Bauteil von dem Zerspanungswerkzeug gewartet werden soll oder nicht.

Das Ankündigungssignal macht einen Empfänger, der das fotosensitive Element hat, darauf aufmerksam, dass das Informationssignal und damit die Informationsbitkette als nächstes angezeigt werden. So wird sichergestellt, dass der Empfänger weiß, wann die von ihm empfangenen Signale zum Informationssignal und damit zur Informationsbitkette gehören. Die Wahrscheinlichkeit, dass ein Störsignal fälschlicherweise als Informationssignal erkannt wird, ist folglich gering, weil empfängerseitig nur solche Signale akzeptiert werden, die zeitlich nach dem Ankündigungssignal empfangen werden.

Das Ankündigungssignal kann von dem Empfänger zudem so verstanden werden, dass die Informationsbitkette aus dem Informationssignal rekonstruiert werden soll. So wird die Decodierung in Gang gesetzt, ohne dass es dafür weiterer Signale bedarf.

Mit Informationsbitzuständen folgend blinkt" ist gemeint, dass die Wartungsanzeige die Informationsbitzustände von der Informationsbitkette nacheinander einliest und je nach eingelesenem Informationsbitzustand in einen ersten Leuchtzustand oder zweiten Leuchtzustand versetzt wird. So kann der erste Leuchtzustand dadurch ausgelöst werden, dass der eingelesene Informationsbitzustand einer logischen Null zugeordnet ist, und der zweite Leuchtzustand dadurch, dass der eingelesene Informationsbitzustand einer logischen Eins zugeordnet ist, oder umgekehrt. Jeder Leuchtzustand hat die gleiche Impulsdauer.

Der erste Leuchtzustand kann auch dadurch erreicht werden, dass die Wartungsanzeige nicht aktiv leuchtet, wenn die Wartungsanzeige hingegen im zweiten Leuchtzustand aktiv leuchtet, oder umgekehrt.

Die Leuchtzustände lassen sich bezüglich ihrer Leuchtfarbe oder ihrer Leuchtintensität unterscheiden, so dass jeder Leuchtzustände entweder einer logischen "Null" oder logischen "Eins" anhand von seiner Leuchtfarbe oder Leuchtintensität zuordenbar ist. Die Leuchtfarbe kann auch weißem Licht entsprechen.

Die Informationsbitkette kann zum Beispiel wie folgt als 8 Bit-Kette von logischen Nullen und Einsen dargestellt werden 01011101, wonach zum Beispiel die Wartungsanzeige wie folgt blinkt: erster Leuchtzustand, zweiter Leuchtzustand, erster Leuchtzustand, zweiter Leuchtzustand, zweiter Leuchtzustand, zweiter Leuchtzustand, erster Leuchtzustand, zweiter Leuchtzustand. Diese zeitliche Abfolge der Leuchtzustände kann von dem fotosensitiven Element gefilmt werden und aus der so gefilmten Abfolge der Leuchtzustände, also dem Informationssignal, kann die Informationsbitkette unter Vorgabe einem Informationsbitlesetakt rekonstruiert werden. Die rekonstruierte Informationsbitkette kann sonach unter Vorgabe von einem Binärcode in den zumindest einen Abschnitt von der Wartungsinformation decodiert werden.

Die Wartungsinformation von dem Bauteil des Zerspanungswerkzeugs kann jeweils zum Beispiel eine Betriebsdauer von dem Bauteil, eine absolvierte Anzahl von Bewegungszyklen von dem Bauteil oder ein Energiespeicherzustand von dem Bauteil sein.

Die Wartungsinformation kann zum Beispiel lauten "100 Stunden Betriebsdauer". Die Informationsbitkette codiert in diesem Beispiel zumindest einen Abschnitt von dieser Wartungsinformation, also zum Beispiel die Zahl "100", das Wort "Stunden" oder das Wort "Betriebsdauer" in einen Binärcode, zum Beispiel in den ASCII-Code. Die Wartungsanzeige blinkt dann den Informationsbitzuständen der binär codierten Zahl "100", des binär codierten Worts "Stunden" oder des binär codierten Worts "Betriebsdauer" folgend, so dass die Informationsbitkette und damit der in diesem Beispiel binär codierte Abschnitt von der Wartungsinformation aus dem Informationssignal rekonstruiert und sonach in einen alphanumerischen Code decodiert werden kann, also in lateinische Buchstaben und arabische Ziffern.

Das Ankündigungssignal kann dem Informationssignal analog von dem fotosensitiven Element gefilmt werden, so dass in einer gemeinsamen Videoaufnahme das Ankündigungssignal zeitlich vor dem Informationssignal erscheint und damit das Informationssignal ankündigt.

Die Wartungsanzeige kann das Ankündigungssignal anzeigen, indem die Wartungsanzeige einer Ankündigungsbitkette folgend blinkt. Dass die Wartungsanzeige der Ankündigungsbitkette folgend blinkt, ist dabei analog zu dem der Informationsbitkette folgenden Blinken von der Wartungsanzeige zu verstehen, wobei die Ankündigungsbitkette so gewählt ist, dass die in der Ankündigungsbitkette enthaltene Abfolge von Bitzuständen in der Informationsbitkette nicht enthalten ist. Dadurch kann der Empfänger noch besser erkennen, dass das Ankündigungssignal keine Wartungsinformation codiert, sondern die Informationsübertragung ankündigt.

Das Informationssignal kann unter Einhaltung von dem Luftspalt außerhalb von einem Datenkabel, einschließlich eines Glasfaserkabels, übertragen und so von dem fotosensitiven Element gefilmt werden, so dass das Informationssignal räumlich besonders flexibel und mit geringem Aufwand gefilmt und damit decodiert werden kann.

Der Luftspalt kann betragsmäßig im Bereich von 0,1 m cm bis 2 m liegen, jeweils bezüglich des Bereichs von der Wartungsanzeige bemessen, der das Informationssignal anzeigt.

Gemäß einer Weiterbildung von der Wartungsanzeige erzeugt diese, wenn die Wartungsinformation einen vorgegebenen Informationsgehalt erreicht hat, ein Warnsignal. Das Warnsignal informiert einen Menschen unmittelbar darüber, dass die Wartungsinformation den vorgegebenen Informationsgehalt erreicht hat, anders als im Falle von dem Informationssignal, dessen Informationsgehalt erst dann für einen Menschen unmittelbar erfassbar ist, wenn das Informationssignal und damit die Informationsbitkette in einen menschenlesbaren Code decodiert wurde, zum Beispiel in einen alphanumerischen Code, der lateinische Buchstaben und arabische Ziffern hat. Der vorgegebene Informationsgehalt von der Wartungsinformation kann sich auf eine vorgegebene Betriebsdauer von dem Bauteil, eine vorgegebene absolvierte Anzahl von Bewegungszyklen von dem Bauteil, insbesondere Umdrehungen bezüglich einer Drehachse oder Ein- und Austauchvorgängen bezüglich einer Bohrung, oder einen vorgegebenen Energiespeicherzustand von dem Bauteil beziehen oder auf eine beliebige Kombination von diesen Parameter.

So wird das Warnsignal von der Wartungsanzeige zum Beispiel dann erzeugt, wenn das Bauteil von dem Zerspanungswerkezug zum Beispiel 5000 Betriebsstunden oder Betriebszyklen erreicht hat.

Bei dem Warnsignal kann es sich um ein optisches, akustisches oder haptisches Signal handeln.

Die Wartungsanzeige erzeugt das Warnsignal vorzugsweise von sich aus, ohne dass dazu der aktivierte Anzeigezustand benötigt wird.

Gemäß einer Weiterbildung von der Wartungsanzeige zeigt diese das Warnsignal zumindest teilweise im sichtbaren Wellenlängenbereich an. Ein solches Warnsignal ist für den Menschen in einer von Maschinengeräuschen geprägten Umgebung besonders gut erfassbar. Der sichtbare Wellenlängenbereich des Lichts liegt im Bereich von etwa 380 nm (violettes Licht) bis etwa 780 nm (rotes Licht), vorzugsweise von 380 nm bis 780 nm. Denkbar und auch möglich ist es auch, dass das Warnsignal als weißes Licht angezeigt wird. Für das Anzeigen des Warnsignals kann ein für das Anzeigen des Informationssignals vorgesehenes Leuchtelement verwendet werden, so dass das Warnsignal besonders platzsparend angezeigt wird. Alternativ oder ergänzend kann auch ein weiteres Leuchtelement für das Anzeigen des Warnsignals verwendet werden.

Gemäß einer Weiterbildung von der Wartungsanzeige dauert das Warnsignal eine vorgegebene Warndauer an, wobei die Warndauer größer ist als eine vorgegebene Informationssignaldauer, die das Informationssignal andauert. Dadurch unterscheidet sich das Warnsignal besonders deutlich von dem Informationssignal, was das Warnsignal für den Menschen noch leichter in seinem Warncharakter erfassbar macht.

Gemäß einer Weiterbildung von der Wartungsanzeige blinkt diese in dem aktivierten Anzeigezustand einem Informationsbitlesetakt folgend, wobei die Informationsbitkette unter Vorgabe von dem Informationsbitlesetakt aus dem Informationssignal rekonstruierbar ist. Die Wartungsanzeige gibt dadurch den Takt vor, unter welchem die Informationsbits von der Informationsbitkette von einem Empfänger, der das fotosensitive Element hat, zu lesen sind. Für das Anzeigen des Informationsbitlesetakts kann ein weiteres Leuchtelement verwendet werden, wohingegen dann für das Anzeigen des Informationssignal ein von dem weiteren Leuchtelement verschiedenes Leuchtelement verwendet wird. Vorzugsweise blinkt die Wartungsanzeige dem Informationsbitlesetakt folgend im sichtbaren Wellenlängenbereich, so dass der Informationsbitlesetakt von dem fotosensitiven Element besonders gut gefilmt werden kann.

Gemäß einer Weiterbildung von der Wartungsanzeige hat diese ein Leuchtelement und ein weiteres Leuchtelement, wobei in dem aktivierten Anzeigezustand jeweils das Leuchtelement den Informationsbitzuständen von der Informationsbitkette folgend blinkt und das weitere Leuchtelement dem Informationsbitlesetakt folgend blinkt. Dies sorgt dafür, dass das Informationssignal von dem Informationsbitlesetakt besser unterschieden werden kann.

Gemäß einer Weiterbildung von der Wartungsanzeige hat diese das fotosensitive Element, wobei das fotosensitive Element den Luftspalt zu einem Anzeigebereich von der Wartungsanzeige einhält, wobei der Anzeigebereich zum Anzeigen des Informationssignals ausgebildet und angeordnet ist. Dadurch wird die Einsatzbereitschaft der Wartungsanzeige erhöht. Das fotosensitive Element lässt sich besonders kostengünstig und einfach in verschiedene mobile Kommunikationsgeräte integrieren oder ist in solchen üblicherweise bereits vorhanden, so zum Beispiel in einem üblichen Handy (Mobiltelefon). Der Anzeigebereich wird zum Beispiel durch ein Leuchtelement gebildet, das das Informationssignal anzeigt.

Gemäß einer Weiterbildung von der Wartungsanzeige hat diese das Bauteil von dem Zerspanungswerkzeug oder ist die Wartungsanzeige das Bauteil von dem Zerspanungswerkzeug. Bei dem Bauteil von dem Zerspanungswerkzeug kann es sich um einen Grundkörper von einem Bohrer, von einem Fräser oder von einem Gewindeschneider handeln; bei dem Grundkörper von dem Gewindeschneider ist der Grundkörper ein Aufnahmefutter zur Aufnahme von einem Gewindeschneidelement. Wenn die Wartungsanzeige das Bauteil von dem Zerspanungswerkzeug ist, ist die Wartungsanzeige zum Beispiel reversibel lösbar an einem der genannten Grundkörper befestigt und wird sonach gemeinsam mit dem Grundkörper bewegt, sei es linear und/oder rotatorisch.

Gemäß einer Weiterbildung von der Wartungsanzeige hat diese einen magnetsensitiven Aktivierungssensor, wobei die Wartungsanzeige in den Anzeigezustand versetzt wird, wenn ein Magnetfeld von einem Permanentmagneten in den Aktivierungssensor eindringt und eine vorgegebene Magnetfeldstärke überschreitet. Dadurch lässt sich die Wartungsanzeige berührungslos in den Anzeigezustand versetzen, was den Einsatz der Wartungsanzeige unter aufseiten eines Zerspanungswerkzeugs beengten oder schlecht zugänglichen Verhältnissen noch mehr verbessert. Vorzugsweise hat die Wartungsanzeige den Permanentmagnet, was die Einsatzbereitschaft der Wartungsanzeige erhöht.

Gemäß einer Weiterbildung von der Wartungsanzeige speichert diese eine weitere Informationsbitkette, wobei die weitere Informationsbitkette zumindest einen weiteren Abschnitt von der Wartungsinformation von dem Bauteil des Zerspanungswerkzeugs binär codiert, wobei die weitere Informationsbitkette mehrere weitere Informationsbits hat, wobei jedes weitere Informationsbit einen Informationsbitzustand hat, wobei die Wartungsanzeige in dem aktivierten Anzeigezustand den Informationsbitzuständen von der weiteren Informationsbitkette folgend blinkt und so ein weiteres Informationssignal zeitlich nach dem Informationssignal anzeigt, wobei das weitere Informationssignal unter Einhaltung von dem Luftspalt von dem fotosensitiven Element gefilmt werden kann. Nach dieser Weiterbildung wird ein weiterer Abschnitt von der Wartungsinformation dem Informationssignal übertragen, so dass die Wartungsanzeige mehrere Abschnitte von der Wartungsinformation überträgt.

Gemäß einer Weiterbildung von der Wartungsanzeige zeigt diese in dem aktivierten Anzeigezustand das Ankündigungssignal wiederholt an, wobei das wiederholt angezeigte Ankündigungssignal das weitere Informationssignal ankündigt. Das wiederholt angezeigte Ankündigungssignal wird also zeitlich nach dem Informationssignal und zeitlich vor dem weiteren Informationssignal angezeigt. Die für das Ankündigungssignal bezüglich des Informationssignals beschriebenen Vorteile werden damit auch bezüglich des weiteren Informationssignals realisiert.

Gemäß einer Weiterbildung von der Wartungsanzeige speichert diese eine Ankündigungsbitkette, wobei die Ankündigungsbitkette mehrere Ankündigungsbit hat, wobei jedes Ankündigungsbit einen Ankündigungsbitzustand hat, wobei die Wartungsanzeige in dem aktivierten Anzeigezustand das Ankündigungssignal anzeigt, indem die Wartungsanzeige den Ankündigungsbitzuständen von der Ankündigungsbitkette folgend blinkt. Das Ankündigungssignal wird also dem Informationssignal analog angezeigt, indem die Wartungsanzeige blinkt.

Vorzugsweise sind die Ankündigungsbitkette und die Informationsbitkette nach demselben Binärcode codiert, zum Beispiel nach dem ASCII-Code, wobei die decodierte Ankündigungsbitkette von dem decodierten Informationssignal verschieden ist. So kann die decodierte Ankündigungsbitkette ein nach dem ASCII-Code nicht druckbares Zeichen codieren, also ein Zeichen, das jeweils kein Buchstabe, keine Ziffer und kein Leerzeichen ist, sondern zu den Steuerzeichen des ASCII-Codes gehört, also zum Bespiel "Carriage Return", "Delete", "Syn" usw. Wenn die Ankündigungsbitkette zu den Steuerzeichen des ASCII-Codes gehört, kann das Ankündigungssignal noch besser von dem Informationssignal unterschieden werden, weil Steuerzeichen keine für die Wartung von dem Bauteil des Zerspanungswerkzeugs relevante Informationen enthalten.

Gemäß einer Weiterbildung von der Wartungsanzeige zeigt diese in dem aktivierten Anzeigezustand das Informationssignal zumindest teilweise im sichtbaren Wellenlängenbereich an. Dadurch ist für den Menschen unmittelbar erfassbar, dass das Informationssignal angezeigt wird beziehungsweise dass die Wartungsanzeige überhaupt aktiv ist. Außerdem ist die Empfindlichkeit von dem fotosensitiven Element üblicherweise im sichtbaren Wellenlängenbereich größer als außerhalb von diesem Wellenlängenbereich. Der sichtbare Wellenlängenbereich des Lichts liegt im Bereich von etwa 380 nm (violettes Licht) bis etwa 780 nm (rotes Licht), vorzugsweise von 380 nm bis 780 nm. Denkbar und auch möglich ist es auch, dass das Informationssignal zumindest teilweise als weißes Licht angezeigt wird.

Gemäß einer Weiterbildung von der Wartungsanzeige zeigt diese in dem aktivierten Anzeigezustand das Ankündigungssignal zumindest teilweise im sichtbaren Wellenlängenbereich an. Dadurch ist es für den Menschen unmittelbar erfassbar, dass das Ankündigungssignal angezeigt wird. Außerdem ist die Empfindlichkeit von dem fotosensitiven Element üblicherweise im sichtbaren Wellenlängenbereich größer als außerhalb von diesem Wellenlängenbereich. Der sichtbare Wellenlängenbereich des Lichts liegt im Bereich von etwa 380 nm (violettes Licht) bis etwa 780 nm (rotes Licht), vorzugsweise von 380 nm bis 780 nm. Denkbar und auch möglich ist es auch, dass das Ankündigungssignal zumindest teilweise als weißes Licht angezeigt wird.

Gemäß einer Weiterbildung von der Wartungsanzeige hat diese einen Beschleunigungssensor, wobei der Beschleunigungssensor zur Erfassung von einer rotatorischen Beschleunigung und/oder einer linearen Beschleunigung ausgebildet und angeordnet ist, wobei die Beschleunigung betragsmäßig im Bereich von 15 m/s² bis 7500 m/s² liegt, wobei die Wartungsanzeige derart ausgebildet und angeordnet ist, dass die Wartungsanzeige auf Basis von einer von dem Beschleunigungssensor erfassten Mindestbeschleunigung den zumindest einen Abschnitt von der Wartungsinformation erzeugt, wobei der Beschleunigungssensor in eine Kunststoffmasse eingebettet ist, wobei die Wartungsanzeige die Kunststoffmasse hat. Die Wartungsanzeige speichert nach dieser Weiterbildung die Wartungsinformation automatisch erst dann ab, wenn die Beschleunigung von dem Bauteil von dem Zerspanungswerkzeug in dem Bereich von 15 m/s² bis 7500 m/s² liegt, dieses Bauteil also eine gewisse bis relative hohe Beschleunigung erfährt. Dadurch wird sichergestellt, dass die Wartungsinformation nur dann aktualisiert gespeichert wird, wenn erwartet wird, dass sich der Wartungszustand von dem Bauteil verändert.

Ergänzend oder alternativ ist die Wartungsanzeige derart ausgebildet, dass die Wartungsinformation automatisch erst dann gespeichert von wird, wenn das Bauteil während der Beschleunigung einem vorgegebenen Bewegungsmuster folgend bewegt wird. Das Bewegungsmuster bildet eine Bewegung von dem Bauteil während einer durch das Zerspanungswerkzeug vorgegebenen Zerspanungsoperation ab, zum Beispiel indem das Zerspanungswerkzeug einer Trajektorie folgend bewegt wird und/oder unter einer Rotation bezüglich einer Drehachse gedreht wird. Die Trajektorie passt zum Beispiel zu einer linearen Hin- und Herbewegung von einem Schleifwerkzeug, das also mit geometrisch unbestimmten Schneidkörpern zerspant, oder einem Gewindeschneider beim Ein- und Austauchen aus einer Bohrung, die Rotation zu einem Bohr- oder Fräswerkzeug, das jeweils bezüglich der Drehachse gedreht wird.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen
- Fig. 1:: eine schematisch dargestellte Wartungsanzeige nach einer Ausführungsform in einer Vorderseitenansicht;
- Fig. 2:: eine schematische Darstellung von einem Bitlesetakt, einem Ankündigungssignal, einem Informationssignal, rekonstruierten Bitzuständen und decodierten Daten, jeweils als Funktion von der Zeit t.
- Fig. 3:: einen schematisch dargestellten inneren Aufbau von der Wartungsanzeige nach der Ausführungsform gemäß Fig. 1;
- Fig. 4a:: ein schematisch dargestelltes Handy in einer Rückseitenansicht;
- Fig. 4b:: das schematisch dargestellte Handy gemäß Fig. 4a in einer Vorderseitenansicht;
- Fig. 5:: ein schematisch dargestelltes Bauteil von einem Zerspanungswerkzeug in einer Seitenansicht, wobei die Wartungsanzeige nach der Ausführungsform gemäß Fig. 1 an dem Bauteil reversibel lösbar befestigt ist.

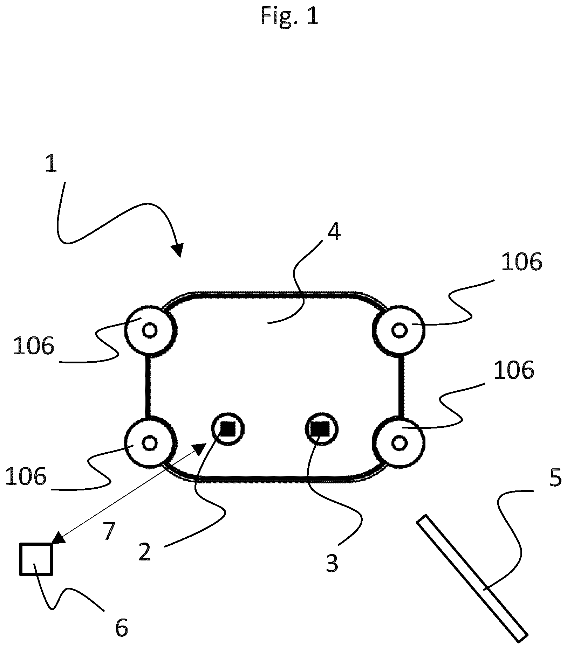

Fig. 1 zeigt eine Wartungsanzeige 1 in Aufsicht. Die Wartungsanzeige 1 hat eine Daten-Leuchtdiode 2 und eine Takt-Leuchtdiode 3. Die Daten-Leuchtdiode 2 und die Takt-Leuchtdiode 3 unterbrechen jeweils ein Gehäuse 4 von der Wartungsanzeige 1, so dass die Daten-Leuchtdiode 2 und die Takt-Leuchtdiode 3 bezüglich ihrer Leuchtzustände jeweils von außen sichtbar sind.

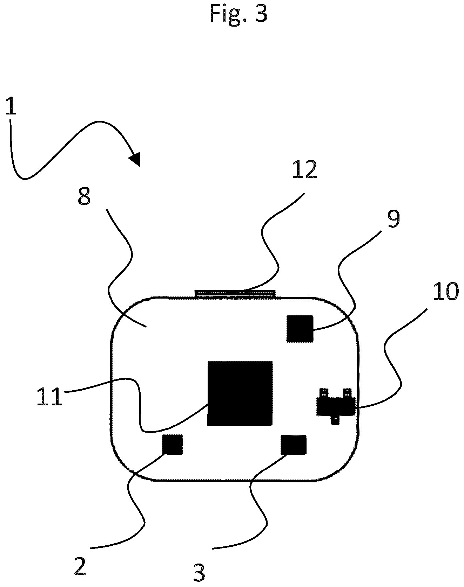

Die Wartungsanzeige 1 wird in einen Anzeigezustand versetzt, also aktiviert, wenn ein Permanentmagnet 5 an die Wartungsanzeige 1 so angenähert wird, dass ein magnetsensitiver Sensor von der Wartungsanzeige 1 das Magnetfeld von dem Permanentmagneten 5 in einer vorgegebenen Magnetfeldstärke erfasst; auf den magnetsensitiven Sensor und weitere Bauteile von der Wartungsanzeige 1 wird Bezug nehmend auf Fig. 3 näher eingegangen.

In dem aktivierten Anzeigezustand von der Wartungsanzeige 1 blinkt die Takt-Leuchtdiode 3 einem Informationsbitlesetakt folgend, indem die Takt-Leuchtdiode 3 periodisch angeschaltet und ausgeschaltet wird. Wenn die Takt-Leuchtdiode 3 angeschaltet ist, leuchtet die Takt-Leuchtdiode 3 im roten sichtbaren Licht. Denkbar und auch möglich ist aber auch, dass die Takt-Leuchtdiode 3 in einer beliebigen anderen Farbe aus dem sichtbaren Lichtwellenlängenbereich leuchtet.

In dem aktivierten Anzeigezustand blinkt die Daten-Leuchtdiode 2 den Informationsbitzuständen von einer Informationsbitkette folgend, indem nacheinanderjeder Informationsbitzustand von den Informationsbits der Informationsbitkette die Daten-Leuchtdiode 2 entweder eine Impulsdauer lang anschaltet, wenn der Informationsbitzustand einer logischen "1" zugeordnet ist, oder eine betragsmäßig gleiche Impulsdauer lang ausschaltet, wenn der Informationsbitzustand einer logischen "0" zugeordnet ist. Auf diese Weise zeigt die Daten-Leuchtdiode 2 und damit die Wartungsanzeige 1 ein Informationssignal an, aus dem unter Vorgabe von dem Informationsbitlesetakt, der von der Takt-Leuchtdiode 3 durch Blinken von dieser angezeigt wird, die Informationsbitkette rekonstruierbar ist.

Wenn die Daten-Leuchtdiode 2 angeschaltet ist, leuchtet die Daten-Leuchtdiode 2 im grünen sichtbaren Licht. Denkbar und auch möglich ist aber auch, dass die Takt-Leuchtdiode 3 in einer beliebigen anderen Farbe aus dem sichtbaren Lichtwellenlängenbereich leuchtet, insbesondere von der Takt-Leuchtdiode 3 verschieden.

Zeitlich bevor die Daten-Leuchtdiode 2 den Informationsbitzuständen von der Informationsbitkette folgend blinkt, blinkt die Daten-Leuchtdiode 2 den Ankündigungsbitzuständen von einer Ankündigungsbitkette folgend, indem nacheinander jeder Ankündigungsbitzustand von der Ankündigungsbitkette die Daten-Leuchtdiode 2 entweder eine Impulsdauer lang anschaltet, wenn der Ankündigungsbitzustand einer logischen "1" zugeordnet ist, oder eine betragsmäßig gleiche Impulsdauer lang ausschaltet, wenn der Ankündigungsbitzustand einer logischen "0" zugeordnet ist. Die Impulsdauer, die jedem Bitzustand zugeordnet ist, ist für die Ankündigungsbitkette und die Informationsbitkette gleich lang.

Die Informationsbitkette und die Ankündigungsbitkette sind jeweils einem Zeichen von dem 8-Bit ASCII Code (American Standard Code for Information Interchange) zugeordnet. Der ASCII Code ist ein Binärcode, der 128 Zeichen binär codiert, es werden also 7 Bits von den 8 Bits für das jeweilige Zeichen verwendet, von denen 33 nicht druckbar und 95 druckbar sind.

Die Zeichen vom ASCII Code entsprechen also einer siebenstelligen Folge von Nullen und Einsen, wobei dieser Folge jeweils eine Null vorangestellt ist, so dass die Folge 8 Bits hat. Jeder achtstelligen Folge von einer Null gefolgt von Nullen und Einsen wird üblicherweise in eine Dezimalzahl oder hexadezimale Zahl umgerechnet und so aufsteigend in der ASCII Codetabelle sortiert, so dass jeder dieser Zahlen jeweils ein Zeichen vom ASCII Code und damit die dazugehörige Bitkette zugeordnet ist. So hat zum Beispiel der Großbuchstabe "S" im ASCII-Code die Bitkette 01010011 und ist unter der Dezimalzahl 53 beziehungsweise unter der hexadezimalen Zahl 83 sortiert (üblicherweise wird im Gebiet von Datencodes hexadezimalen Zahlen das Kürzel "0x" vorangestellt, so wird die hexadezimale Zahl 83 dann als 0x83 dargestellt).

Zu den druckbaren Zeichen vom ASCII Code gehören die Groß- und Kleinbuchstaben des lateinischen Alphabets, die zehn arabischen Ziffern 0 bis 9 sowie Interpunktionszeichen und Sonderzeichen, einschließlich das Leerzeichen. Die druckbaren Zeichen sind unter den Dezimalzahlen 32 bis 47 (Sonderzeichen), 58 bis 64 (Sonderzeichen), 91 bis 96 (Sonderzeichen), 123 bis 126 (Sonderzeichen), 48 bis 57 (Ziffern), 65 bis 90 (Buchstaben) und 97 bis 122 (Buchstaben) einsortiert.

Zu den nicht druckbaren Zeichen gehören die Steuerzeichen. Die Steuerzeichen dienen üblicherweise dazu, in einem Datencode Textsteuerbefehle zu codieren, so zum Beispiel Zeilenumbrüche oder Tabulatoren. Die nicht druckbaren Zeichen sind unter den Dezimalzahlen 0 bis 31 und 127 im ASCII Code einsortiert.

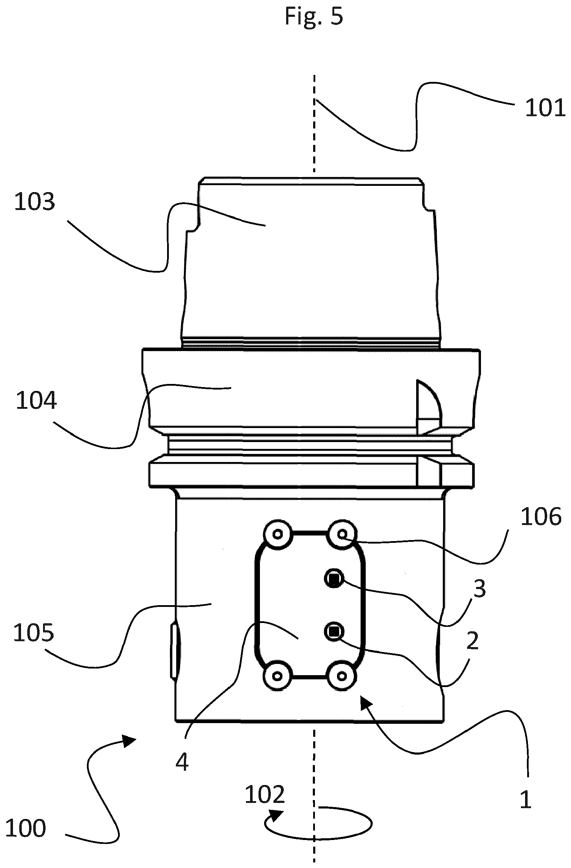

Die Informationsbitkette von der Wartungsanzeige 1 codiert ein druckbares Zeichen vom ASCII Code und codiert so binär einen Abschnitt, also zum Beispiel einen Buchstaben, eine Ziffer oder ein Leerzeichen, von einer Wartungsinformation von in dem in Fig. 5 gezeigten Bauteil 100; auf das Bauteil 100 wird Bezug nehmend auf Fig. 5 näher eingegangen.

Die Wartungsinformation hat exemplarisch den Informationsgehalt "2424 Betriebszyklen", also die vier Ziffern 2, 4, 2, 4, ein Leerzeichen und die vierzehn Buchstaben B, e, t, r, i, e, b, s, z, y, k, l, e, n. Um die gesamte Wartungsinformation durch das beschriebene Blinken der Daten-Leuchtdiode 2 anzuzeigen, werden also 19 Informationsbitketten für diese 19 Abschnitte von der Wartungsinformation benötigt.

Die Wartungsanzeige 1 kann diese Informationsbitketten und beliebige andere Informationsbitketten, jeweils von der exemplarischen 8-Bit Länge, gemäß dem ASCII Code speichern und die Daten-Leuchtdiode 2 wie beschrieben zum Blinken bringen, so dass auch alle Abschnitte von der Wartungsinformation angezeigt werden können.

Die Ankündigungsbitkette bei der in Fig. 1 gezeigten Ausführungsform von der Wartungsanzeige 1 codiert ein nicht druckbares Zeichen von dem ASCII Code, so dass eine Decodierung von der Ankündigungsbitkette nicht fälschlicherweise als Abschnitt von der Wartungsinformation verstanden wird.

Ein fotosensitives Element 6, zum Beispiel ein CCD-Chip (Charge Coupled Device Chip) oder ein CMOS-Chip (Complementary Metal-Oxide Semiconductor Chip), ist in Fig. 1 exemplarisch als Kasten dargestellt und filmt unter Einhaltung von einem Luftspalt 7 das durch das Blinken der Daten-Leuchtdiode 2 angezeigte Ankündigungssignal und das zeitlich nach dem Ankündigungssignal durch das weitere Blinken der Daten-Leuchtdiode 2 angezeigte Informationssignal. Während das fotosensitive Element 6 das Informationssignal und das Ankündigungssignal filmt, filmt das fotosensitive Element auch das Blinken der Takt-Leuchtdiode 3; der Luftspalt 7 ist perspektivisch gezeichnet, und soll damit deutlich machen, dass ein gewisser Abstand zwischen der Daten-Leuchtdiode 2 und dem fotosensitiven Element 6 eingehalten wird, also anders als bei einem Glasfaseranschluss an das fotosensitive Element 6.

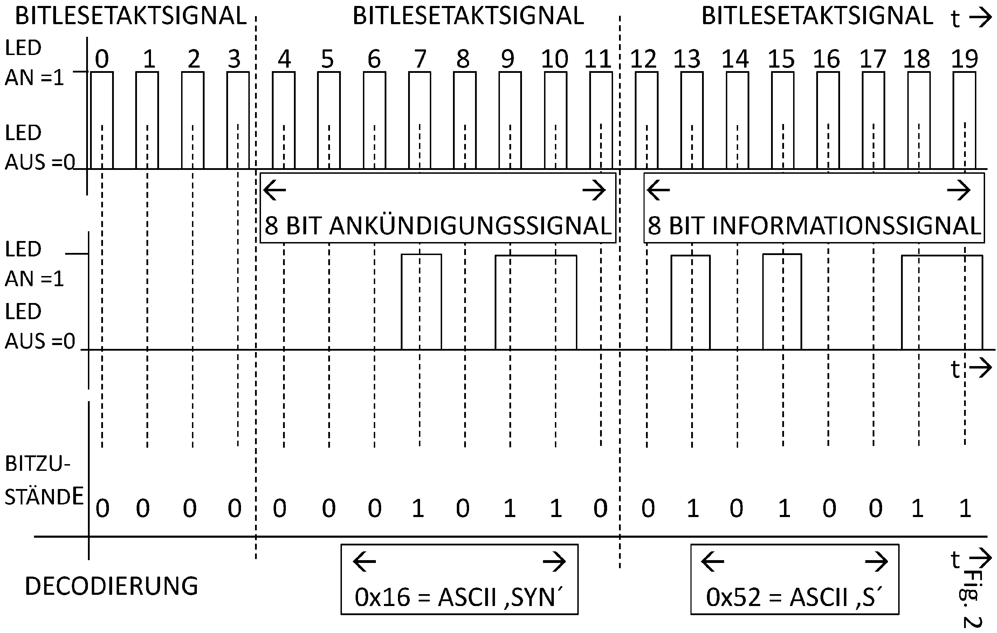

Die so von dem fotosensitiven Element 6 gefilmten Signale werden exemplarisch in Fig. 2 jeweils als Funktion von der Zeit t gezeigt. In Fig. 2 wird die Abkürzung LED für den Begriff Leuchtdiode verwendet.

Der in Fig. 2 oberste Signalverlauf zeigt den von dem fotosensitiven Element 6 gefilmten Informationsbitlesetakt, in Fig. 2 als Bitlesetakt bezeichnet. Wenn die Takt-Leuchtdiode 3 angeschaltet ist, was in dem obersten Signalverlauf von Fig. 2 als "LED AN" gezeigt wird, entspricht dies einer logischen "Eins", also LED AN = 1. Wenn die Takt-Leuchtdiode 3 ausgeschaltet ist, was in dem obersten Signalverlauf von Fig. 2 als "LED AUS" gezeigt wird, entspricht dies einer logischen "Null", also LED AUS = 0. Die so abgebildeten, angeschalteten Leuchtzustände von der Takt-Leuchtdiode 3 erscheinen in Fig. 2 als Rechtecksignale jeweils gleicher Breite und sind aus Gründen der Übersichtlichkeit in Fig. 2 von 0 bis 19 nummeriert, in dieser Reihenfolge nimmt auch die Zeit t zu.

Der in Fig. 2 mittlere Signalverlauf zeigt das von dem fotosensitiven Element 6 jeweils gefilmte Ankündigungssignal und Informationssignal. Wenn die Daten-Leuchtdiode 2 angeschaltet ist, was in dem mittleren Signalverlauf von Fig. 2 als "LED AN" gezeigt wird, entspricht dies einer logischen "Eins", also LED AN = 1. Wenn die Daten-Leuchtdiode 2 ausgeschaltet ist, was in dem mittleren Signalverlauf von Fig. 2 als "LED AUS" gezeigt wird, entspricht dies einer logischen "Null", also LED AUS = 0. Die so abgebildeten, angeschalteten Leuchtzustände von der Daten-Leuchtdiode 2 erscheinen in Fig. 2 als Rechtecksignale.

In Fig. 2 wird sonach gezeigt, dass die angeschalteten Leuchtzustände 0 bis 3 von der Takt-Leuchtdiode 3 zeitlich vor dem Ankündigungssignal angezeigt werden, was für eine Taktsynchronisation aufseiten eines Empfängers, der das fotosensitive Element 6 hat, dienen kann. Die angeschalteten Leuchtzustände 0 bis 3 von der Takt-Leuchtdiode 3 sind aber optional, so dass die Datenübertragung mit der Wartungsanzeige 1 auch ohne die ersten vier Informationsbitlesetakte funktioniert.

Im zeitlichen Bereich der angeschalteten Leuchtzustände 4 bis 11 wird das Ankündigungssignal gezeigt. Die Ankündigungsbitkette wird aus dem Ankündigungssignal so rekonstruiert, zum Beispiel durch eine mit dem fotosensitiven Element 6 zusammenwirkende Rekonstruktionssoftware, dass dem Ankündigungssignalverlauf immer dann der Bitzustand "1" zugeordnet wird, wenn zeitlich in der Mitte von einem der angeschalteten Leuchtzustände 4 bis 11 gleichzeitig die Daten-Leuchtdiode 2 angeschaltet ist. Wenn hingegen zeitlich in der Mitte von einem der angeschalteten Leuchtzustände 4 bis 11 die Daten-Leuchtdiode 2 ausgeschaltet ist, wird dem Ankündigungssignalverlauf eine "0" zugeordnet.

In der Zeile "Bitzustände" in Fig. 2 wird das Ergebnis der beschriebene Rekonstruktion von der Ankündigungsbitkette aus dem Ankündigungssignal gezeigt: 00010110.

In der Zeile "Decodierung" in Fig. 2 wird die decodierte Ankündigungsbitkette gezeigt, nämlich dass die Ankündigungsbitkette das nicht druckbare Zeichen "SYN" (Großbuchstabe) codiert, dem in der ASCII Tabelle die hexadezimale Zahl 0x16 zugeordnet ist. Die Decodierung kann zum Beispiel von einer Decodierungssoftware durchgeführt werden, die auf dem Empfänger, der das fotosensitive Element 6 hat, ausführbar abgespeichert ist.

Im zeitlichen Bereich der angeschalteten Leuchtzustände 12 bis 19 wird in Fig. 2 das Informationssignal gezeigt, also zeitlich nach dem Ankündigungssignal. Die Informationsbitkette wird aus dem Informationssignal so rekonstruiert, zum Beispiel durch eine mit dem fotosensitiven Element 6 zusammenwirkende Rekonstruktionssoftware, dass dem Informationssignalverlauf immer dann der Bitzustand "1" zugeordnet wird, wenn zeitlich in der Mitte von einem der angeschalteten Leuchtzustände 12 bis 19 gleichzeitig die Daten-Leuchtdiode 2 angeschaltet ist. Wenn hingegen zeitlich in der Mitte von einem der angeschalteten Leuchtzustände 12 bis 19 die Daten-Leuchtdiode 2 ausgeschaltet ist, wird dem Informationssignalverlauf eine "0" zugeordnet.

In der Zeile "Bitzustände" in Fig. 2 wird das Ergebnis der beschriebene Rekonstruktion von der Informationsbitkette aus dem Informationssignal gezeigt: 01010011.

In der Zeile "Decodierung" in Fig. 2 wird die decodierte Informationsbitkette gezeigt, nämlich dass die Informationsbitkette das druckbare Zeichen "S" (Großbuchstabe) codiert, dem in der ASCII Tabelle die hexadezimale Zahl 0x52 zugeordnet ist. Die Decodierung kann zum Beispiel von einer Decodierungssoftware durchgeführt werden, die auf dem Empfänger, der das fotosensitive Element 6 hat, ausführbar abgespeichert ist.

Möglich und auch denkbar ist es, dass die Daten-Leuchtdiode 2 zeitlich nach dem Informationssignal ein dem Ankündigungssignal analog aufgebautes Endsignal anzeigt, indem die Daten-Leuchtdiode 2 den Bitzuständen von einer der Ankündigungsbitkette analog aufgebauten Bitkette folgend blinkt, die ein weiteres oder dasselbe nicht druckbare Zeichen codiert.

An dieser Stelle wird ausdrücklich festgehalten, dass ein Empfänger, der das fotosensitive Element 6 und die Rekonstruktionssoftware hat, die Ankündigungsbitkette und die Informationsbitkette auch ohne das Blinken von der Takt-Leuchtdiode 3 rekonstruieren kann, indem ein solcher Empfänger auf Basis von dem Ankündigungssignal erkennt, unter welchem Takt er die Ankündigungsbitkette und die Informationsbitkette aus dem Ankündigungssignal beziehungsweise dem Informationssignal rekonstruieren soll.

Die Daten-Leuchtdiode 2 und/oder die Takt-Leuchtdiode 3 leuchten dauerhaft im sichtbaren Wellenlängenbereich, wenn die Wartungsinformation einen vorgegebenen Informationsgehalt erreicht hat, zum Beispiel "200000 Betriebszyklen". Auf diese Weise zeigt die Wartungsanzeige 1 ein für den Menschen unmittelbar in seiner Bedeutung erfassbares Warnsignal an.

Fig. 3 zeigt exemplarisch den inneren Aufbau von der Wartungsanzeige 1, also ohne Gehäuse 4. So hat die Wartungsanzeige 1 eine Trägerplatine 8. Die Trägerplatine 8 trägt in ihrem in Aufsicht gemäß Fig. 3 gezeigten Bereich einen Beschleunigungssensor 9, einen magnetsensitiven Sensor 10, einen Mikrocontroller 11, die Daten-Leuchtdiode 2 und die Takt-Leuchtdiode 3. Rückseitig trägt die Trägerplatine 8 eine Batterie 12; die Batterie 12 ragt abschnittsweise über die Trägerplatine 8 gemäß der in Fig. 3 gewählt Aufsicht hinaus.

Der Mikrocontroller 11 verarbeitet von dem Beschleunigungssensor 9 und dem magnetsensitiven Sensor 10 empfangene Signale. So zählt der Mikrocontroller 11 ab einer von dem Beschleunigungssensor 9 erfassten rotatorischen Mindestbeschleunigung Betriebszyklen von dem in Fig. 5 gezeigten Bauteil 100 von einem Zerspanungswerkzeug und zählt und ab einem Unterschreiten von dieser Mindestbeschleunigung keine Betriebszyklen. Die so gewonnene Wartungsinformation codiert der Mikrocontroller 11 in mehrere Informationsbitketten binär nach dem ASCII Code und speichert diese Informationsbitketten ab. Zugleich speichert der Mikrocontroller ein oder mehrere Ankündigungssignale binär nach dem ASCII Code auf Basis von jeweils einem nicht druckbaren Zeichen ab.

Wenn der magnetsensitive Sensor 10 eine magnetische Feldstärke in einer vorgegebenen Mindestfeldstärke erfasst, registriert dies der Mikrocontroller 11 und aktiviert wie bezüglich Fig. 1 und Fig. 2 beschrieben die Daten-Leuchtdiode 2 und die Takt-Leuchtdiode 3, so dass diese jeweils blinken.

Der Mikrokontroller 11 aktiviert die Daten-Leuchtdiode 2 oder die Takt-Leichtdiode 3 so, dass zumindest eine von ihnen dauerhaft leuchtet, also ein für den Menschen bezügliches seines Informationsgehaltes unmittelbar erfassbares Warnsignal erzeugt wird, wenn der Mikrokontroller 11 gezählt hat, dass die Anzahl der Betriebszyklen einen von ihm gespeichertem Mindestbetrag überschritten hat.

Die Batterie 12 versorgt die Wartungsanzeige 1 und ihre bezüglich Fig. 3 beschriebenen elektronischen Bauteile mit elektrischer Energie. Wenn der Energiespeicherzustand von der Batterie 12 einen Mindestbetrag unterschreitet, wird auch dies von dem Mikrocontroller 11 registriert, so dass er das beschriebene Warnsignal erzeugt. Der Energiespeicherzustand kann auch ein Bestandteil von der Wartungsinformation sein, neben den erfassten und gespeicherten Betriebszyklen, und kann auch analog zu Fig. 2 gezeigt werden. Die Batterie 12 wird reversibel lösbar von der Trägerplatine 8 getragen.

Die Trägerplatine 8 und damit die bezüglich Fig. 3 beschriebenen elektronischen Komponenten, sind in eine nicht dargestellte Kunststoffmasse eingebettet, so auch der Beschleunigungssensor 9 in Alleinstellung, wobei die Batterie 12 zugänglich gehalten wird.

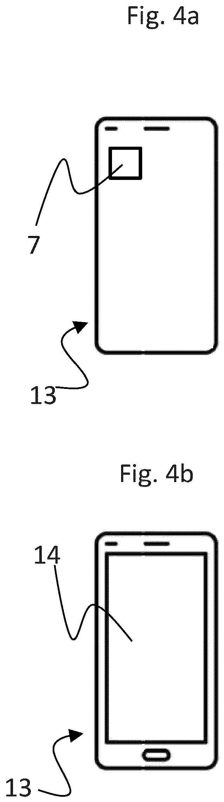

Fig. 4a zeigt eine Rückseite von einem Handy 13. In das Handy 13 ist das fotosensitive Element 6 integriert, so dass das Handy 13 das bezüglich Fig. 1 und Fig. 2 beschriebene Blinken der Wartungsanzeige 1 filmen kann und die so auch gespeicherten Filme oder den Film der bezüglich Fig. 2 beschriebenen Bitketten-Rekonstruktion und Decodierung unterwerfen kann.

Das Handy 13 kann die gefilmten Signale und/oder das oder die decodierten Informationsbitketten, also Abschnitte von der Wartungsinformation, funkgebunden oder optisch an ein anderes Gerät oder in ein Rechnernetzwerk, wozu auch das Internet gehört, jeweils zur Datenverarbeitung und Datenspeicherung senden.

Fig. 4b zeigt die Vorderseite von dem Handy 13. Die Vorderseite hat ein Display 14, welches die decodierte Informationsbitkette zeigt, wenn das Handy 13 diesbezüglich aktiviert wurde. Denkbar und auch möglich ist es aber auch, dass das fotosensitive Element 6 in ein anderes mobiles Endgerät zum Filmen von dem Blinken der Wartungsanzeige 1, so wie es bezüglich Fig. 1 und Fig. 2 beschrieben wird, integriert ist.

Fig. 5 zeigt eine Seitenansicht von einem Bauteil 100 von einem Zerspanungswerkzeug. Das Bauteil 100 wird zumindest während einer Zerspanung von einem metallischen Werkstück bezüglich der Drehachse 101 in die exemplarische Drehrichtung 102 unter einer Mindestbeschleunigung von 15 m/s² beschleunigt.

Das Bauteil 100 hat einen Spindelmontageabschnitt 103, in welchen eine nicht dargestellte Maschinenspindel drehfest einsteckbar ist. Das Bauteil 100 hat ferner einen Anschlagkragen 104, der gegen einen Abschnitt von der nicht dargestellten Maschinenspindel aufseiten der Maschinenspindel anschlägt.

Das Bauteil 100 hat ferner einen Arbeitsabschnitt 105, so dass der Anschlagkragen 104 zwischen dem Arbeitsabschnitt 105 und dem Spindelmontageabschnitt 103 angeordnet ist. Der Arbeitsabschnitt 105 ist während der Zerspanung aufseiten des nicht dargestellten metallischen Werkstücks angeordnet.

Die Wartungsanzeige 1 hat vier Schrauben 106, die auch in Fig. 1 gezeigt sind. Die Schrauben 106 befestigen die Wartungsanzeige 1 reversibel lösbar an dem Arbeitsabschnitt 105, so dass die Wartungsanzeige 1, wie bezüglich Fig. 1 bis 3 beschrieben, die Betriebszyklen des Bauteils 100, also die Anzahl von Umdrehungen bezüglich der Drehachse 101, zählt, binär speichert und durch Blinken der Daten-Leuchtdiode 2 anzeigt, letzteres, wenn die Wartungsanzeige 1 in den bezüglich Fig. 1 beschriebenen aktivierten Anzeigezustand versetzt wurde.

Fig. 1, 2, 3 und 5 zeigen damit eine Wartungsanzeige 1, die eine Wartungsinformation platzsparend durch Blinken von einer Daten-Leuchtdiode 2 anzeigt und dass die so angezeigte Wartungsinformation von einem fotosensitiven Element 6 unter Einhaltung von einem Luftspalt 7 gefilmt und auf Basis davon für den Menschen sichtbar gemacht werden kann, nämlich durch eine Bitketten-Rekonstruktion, die gemäß Fig. 4a und 4b von einem Handy 13 durchgeführt und gezeigt wird, wobei das gefilmte Ankündigungssignal auf Basis von einem nicht druckbaren Zeichen aus dem ASCII dazu dient, dass das Informationssignal störungssicher erkannt wird. Das Blinken der Takt-Leuchtdiode 3 ist dabei optional.

Anstelle der Leuchtdioden 2 und 3 können auch jeweils andere Leuchtelemente verwendet werden, die jeweils in Abhängigkeit von einem Bitzustand angeschaltet und ausgeschaltet werden können und dabei im sichtbaren Wellenlängenbereich leuchten, wenn sie angeschaltet sind.

## Patentansprüche

1. Wartungsanzeige (1), wobei die Wartungsanzeige (1) ausgebildet ist,
eine Informationsbitkette zu speichern, wobei die Informationsbitkette zumindest einen Abschnitt einer Wartungsinformation eines Bauteils (100) eines Zerspanungswerkzeugs binär codiert, wobei die Informationsbitkette mehrere Informationsbits hat, wobei jedes Informationsbit einen Informationsbitzustand hat,
**dadurch gekennzeichnet, dass**
die Wartungsanzeige(1) ausgebildet ist, in einem aktivierten Anzeigezustand den Informationsbitzuständen der Informationsbitkette folgend zu blinken und so ein Informationssignal anzuzeigen, und die Wartungsanzeige ausgebildet ist, in dem aktivierten Anzeigezustand ein Ankündigungssignal anzuzeigen,
wobei das Ankündigungssignal das Informationssignal ankündigt, wobei das Informationssignal unter Einhaltung von einem Luftspalt (7) von einem fotosensitiven Element (6) gefilmt werden kann.

2. Wartungsanzeige (1) nach Anspruch 1, wobei die Wartungsanzeige (1) ausgebildet ist, ein Warnsignal zu erzeugen, wenn die Wartungsinformation einen vorgegebenen Informationsgehalt erreicht hat.

3. Wartungsanzeige (1) nach Anspruch 2, wobei die Wartungsanzeige ausgebildet ist, das Warnsignal zumindest teilweise im sichtbaren Wellenlängenbereich anzuzeigen.

4. Wartungsanzeige (1) nach Anspruch 3, wobei das Warnsignal eine vorgegebene Warndauer andauert, wobei die Warndauer größer ist als eine vorgegebene Informationssignaldauer, die das Informationssignal andauert.

5. Wartungsanzeige (1) nach einem der vorhergehenden Ansprüche, wobei die Wartungsanzeige (1) ausgebildet ist, in dem aktivierten Anzeigezustand einem Informationsbitlesetakt folgend zu blinken, wobei die Informationsbitkette unter Vorgabe von dem Informationsbitlesetakt aus dem Informationssignal rekonstruierbar ist.

6. Wartungsanzeige (1) nach Anspruch 5, wobei die Wartungsanzeige (1) ein Leuchtelement (2) und ein weiteres Leuchtelement (3) hat, wobei in dem aktivierten Anzeigezustand jeweils das Leuchtelement (2) den Informationsbitzuständen von der Informationsbitkette folgend blinkt und das weitere Leuchtelement (3) dem Informationsbitlesetakt folgend blinkt.

7. Wartungsanzeige (1) nach einem der vorhergehenden Ansprüche, wobei die Wartungsanzeige (1) das fotosensitive Element (6) hat, wobei das fotosensitive Element (6) den Luftspalt zu einem Anzeigebereich (2) von der Wartungsanzeige (1) einhält, wobei der Anzeigebereich (2) zum Anzeigen des Informationssignals ausgebildet und angeordnet ist.

8. Wartungsanzeige (1) nach einem der vorhergehenden Ansprüche, wobei die Wartungsanzeige (1) das Bauteil (100) von dem Zerspanungswerkzeug hat oder wobei die Wartungsanzeige (1) das Bauteil (100) von dem Zerspanungswerkzeug ist.

9. Wartungsanzeige (1) nach einem der vorhergehenden Ansprüche, wobei die Wartungsanzeige (1) einen magnetsensitiven Aktivierungssensor (10) hat, wobei die Wartungsanzeige (1) in den Anzeigezustand versetzt wird, wenn ein Magnetfeld von einem Permanentmagneten in den Aktivierungssensor eindringt und eine vorgegebene Magnetfeldstärke überschreitet.

10. Wartungsanzeige (1) nach einem der vorhergehenden Ansprüche, wobei die Wartungsanzeige (1) ausgebildet ist, eine weitere Informationsbitkette zu speichern, wobei die weitere Informationsbitkette zumindest einen weiteren Abschnitt von der Wartungsinformation von dem Bauteil des Zerspanungswerkzeugs binär codiert, wobei die weitere Informationsbitkette mehrere weitere Informationsbits hat, wobei jedes weitere Informationsbit einen Informationsbitzustand hat, wobei die Wartungsanzeige (1) ausgebildet ist, in dem aktivierten Anzeigezustand den Informationsbitzuständen der weiteren Informationsbitkette folgend zu blinken und so ein weiteres Informationssignal zeitlich nach dem Informationssignal anzuzeigen, wobei das weitere Informationssignal unter Einhaltung von dem Luftspalt (7) von dem fotosensitiven Element (6) gefilmt werden kann.

11. Wartungsanzeige (1) nach Anspruch 10, wobei die Wartungsanzeige (1) ausgebildet ist, in dem aktivierten Anzeigezustand das Ankündigungssignal wiederholt anzuzeigen, wobei das wiederholt angezeigte Ankündigungssignal das weitere Informationssignal ankündigt.

12. Wartungsanzeige (1) nach einem der vorhergehenden Ansprüche, wobei die Wartungsanzeige (1) ausgebildet ist, eine Ankündigungsbitkette zu speichern, wobei die Ankündigungsbitkette mehrere Ankündigungsbit hat, wobei jedes Ankündigungsbit einen Ankündigungsbitzustand hat, wobei die Wartungsanzeige (1) ausgebildet ist, in dem aktivierten Anzeigezustand das Ankündigungssignal anzuzeigen, indem die Wartungsanzeige (1) den Ankündigungsbitzuständen von der Ankündigungsbitkette folgend blinkt.

13. Wartungsanzeige (1) nach einem der vorhergehenden Ansprüche, wobei die Wartungsanzeige (1) ausgebildet ist, in dem aktivierten Anzeigezustand das Informationssignal zumindest teilweise im sichtbaren Wellenlängenbereich anzuzeigen.

14. Wartungsanzeige (1) nach einem der vorhergehenden Ansprüche, wobei die Wartungsanzeige (1) ausgebildet ist, in dem aktivierten Anzeigezustand das Ankündigungssignal zumindest teilweise im sichtbaren Wellenlängenbereich anzuzeigen.

15. Wartungsanzeige (1) nach einem der vorhergehenden Ansprüche, wobei die Wartungsanzeige (1) einen Beschleunigungssensor (9) hat, wobei der Beschleunigungssensor (9) zur Erfassung einer rotatorischen Beschleunigung und/oder einer linearen Beschleunigung ausgebildet und angeordnet ist, wobei die Beschleunigung betragsmäßig im Bereich von 15 m/s² bis 7500 m/s² liegt, wobei die Wartungsanzeige (1) derart ausgebildet und angeordnet ist, dass die Wartungsanzeige (1) auf Basis von einer von dem Beschleunigungssensor (9) erfassten Mindestbeschleunigung den zumindest einen Abschnitt von der Wartungsinformation erzeugt, wobei der Beschleunigungssensor (9) in eine Kunststoffmasse eingebettet ist, wobei die Wartungsanzeige (1) die Kunststoffmasse hat.

## Claims

1. Maintenance indicator (1), wherein the maintenance indicator (1) is configured to store an information bit string, wherein the information bit string encodes at least a section of a piece of maintenance information of a component (100) of a cutting tool in binary, wherein the information bit string has a plurality of information bits, wherein each information bit has an information bit state, **characterized in that** the maintenance indicator (1) is configured, in an activated display state, to emit flashes that follow the information bit states of the information bit string and thus to display an information signal, wherein the maintenance indicator (1) is configured, in the activated display state, to display an announcement signal, wherein the announcement signal announces the information signal, wherein the information signal can be filmed by a photosensitive element (6) while maintaining an air gap (7).

2. Maintenance indicator (1) as claimed in claim 1, wherein the maintenance indicator (1) is configured to create a warning signal once the piece of maintenance information has reached a specified information content.

3. Maintenance indicator (1) as claimed in claim 2, wherein the maintenance indicator (1) is configured to display the warning signal at least partially in the visible wavelength range.

4. Maintenance indicator (1) as claimed in claim 3, wherein the warning signal has a specified warning duration, wherein the warning duration being longer than a specified information signal duration for the information signal.

5. Maintenance indicator (1) as claimed in any of the preceding claims, wherein the maintenance indicator (1) is configured, in the activated display state, to emit flashes that follow an information bit reading clock, wherein the information bit string is reconstructible from the information signal given the information bit reading clock.

6. Maintenance indicator (1) as claimed in claim 5, wherein the maintenance indicator (1) comprises a luminous element (2) and a further luminous element (3), wherein, in the activated display state, the luminous element (2) emits flashes that follow the information bit states of the information bit string and the further luminous element (3) emits flashes that follow the information bit reading clock.

7. Maintenance indicator (1) as claimed in any of the preceding claims, wherein the maintenance indicator (1) comprises the photosensitive element (6), wherein the photosensitive element (6) maintains the air gap from an indicator region (2) of the maintenance indicator (1), wherein the indicator region (2) is designed and arranged to display the information signal.

8. Maintenance indicator (1) as claimed in any of the preceding claims, wherein the maintenance indicator (1) comprises the component (100) of the cutting tool or wherein the maintenance indicator (1) is the component (100) of the cutting tool.

9. Maintenance indicator (1) as claimed in any of the preceding claims, wherein the maintenance indicator (1) comprises a magnet-sensitive activation sensor (10), wherein the indication state of the maintenance indicator (1) is set when a magnetic field of a permanent magnet penetrates into the activation sensor and exceeds a specified magnetic field strength.

10. Maintenance indicator (1) as claimed in any of the preceding claims, wherein the maintenance indicator (1) is configured to store a further information bit string, wherein the further information bit string encodes at least one further section of the piece of maintenance information from the component of the cutting tool in binary, wherein the further information bit string has a plurality of further information bits, wherein each further information bit has an information bit state, wherein the maintenance indicator (1) is configured, in the activated display state, to emit flashes that follow the information bit states of the further information bit string and thus displays a further information signal after the information signal, wherein the further information signal can be filmed by the photosensitive element (6) while maintaining the air gap (7).

11. Maintenance indicator (1) as claimed in claim 10, wherein the maintenance indicator (1) is configured, in the activated display state, to repeatedly display the announcement signal, wherein the repeatedly displayed announcement signal announces the further information signal.

12. Maintenance indicator (1) as claimed in any of the preceding claims, wherein the maintenance indicator (1) is configured to store an announcement bit string, wherein the announcement bit string has a plurality of announcement bits, wherein each announcement bit has an announcement bit state, wherein the maintenance indicator (1) is configured, in the activated display state, to display the announcement signal by virtue of the maintenance indicator (1) emitting flashes that follow the announcement bit states of the announcement bit string.

13. Maintenance indicator (1) as claimed in any of the preceding claims, wherein the maintenance indicator (1) is configured, in the activated display state, to display the information signal at least partially in the visible wavelength range.

14. Maintenance indicator (1) as claimed in any of the preceding claims, wherein the maintenance indicator (1) is configured, in the activated display state, to display the announcement signal at least partially in the visible wavelength range.

15. Maintenance indicator (1) as claimed in any of the preceding claims, wherein the maintenance indicator (1) comprises an acceleration sensor (9), wherein the acceleration sensor (9) is designed and arranged to measure a rotational acceleration and/or a linear acceleration, wherein the magnitude of the acceleration is in the range from 15 m/s² to 7500 m/s², wherein the maintenance indicator (1) is designed and arranged such that the maintenance indicator (1) creates the at least one section of the piece of maintenance information on the basis of a minimum acceleration measured by the acceleration sensor (9), wherein the acceleration sensor (9) is embedded in a plastics mass, wherein the maintenance indicator (1) comprises the plastics mass.

## Revendications

1. Dispositif d'affichage de maintenance (1), le dispositif d'affichage de maintenance (1) étant formé pour stocker une chaîne de bits d'information, la chaîne de bits d'information codant de manière binaire au moins une partie des informations de maintenance d'un composant (100) d'un outil de coupe, la chaîne de bits d'information comportant plusieurs bits d'information, chaque bit d'information présentant un état de bit d'information,
**caractérisé en ce que**
le dispositif d'affichage de maintenance (1) est formé pour clignoter dans un état d'affichage activé suivant les états de bit d'information de la chaîne de bits d'information et afficher ainsi un signal d'information, et le dispositif d'affichage de maintenance est formé pour afficher un signal d'annonce dans l'état d'affichage activé, le signal d'annonce annonçant le signal d'information, le signal d'information pouvant être filmé par un élément photosensible (6) tout en maintenant un entrefer (7).

2. Dispositif d'affichage de maintenance (1) selon la revendication 1, le dispositif d'affichage de maintenance (1) étant formé pour générer un signal d'avertissement lorsque les informations de maintenance ont atteint un contenu d'information prédéfini.

3. Dispositif d'affichage de maintenance (1) selon la revendication 2, le dispositif d'affichage de maintenance étant formé pour afficher le signal d'avertissement au moins en partie dans la plage de longueurs d'onde visibles.

4. Dispositif d'affichage de maintenance (1) selon la revendication 3, le signal d'avertissement durant pendant une durée d'avertissement prédéfinie, la durée d'avertissement étant supérieure à une durée de signal d'information prédéfinie que dure le signal d'information.

5. Dispositif d'affichage de maintenance (1) selon l'une des revendications précédentes, le dispositif d'affichage de maintenance (1) étant formé pour clignoter suivant une cadence de lecture de bit d'information dans l'état d'affichage activé, la chaîne de bits d'information pouvant être reconstruite à partir du signal d'information avec spécification de la cadence de lecture de bit d'information.

6. Dispositif d'affichage de maintenance (1) selon la revendication 5, le dispositif d'affichage de maintenance (1) comportant un élément d'éclairage (2) et un autre élément d'éclairage (3), l'élément d'éclairage (2) clignotant, dans l'état d'affichage activé, suivant les états de bit d'information de la chaîne de bits d'information et l'autre élément d'éclairage (3) clignotant suivant la cadence de lecture de bits d'information.

7. Dispositif d'affichage de maintenance (1) selon l'une des revendications précédentes, le dispositif d'affichage de maintenance (1) comportant l'élément photosensible (6), l'élément photosensible (6) maintenant l'entrefer vers une zone d'affichage (2) du dispositif d'affichage de maintenance (1), la zone d'affichage (2) étant formée et disposée pour afficher le signal d'information.

8. Dispositif d'affichage de maintenance (1) selon l'une des revendications précédentes, le dispositif d'affichage de maintenance (1) comportant le composant (100) de l'outil de coupe ou le dispositif d'affichage de maintenance (1) étant le composant (100) de l'outil de coupe.

9. Dispositif d'affichage de maintenance (1) selon l'une des revendications précédentes, le dispositif d'affichage de maintenance (1) comportant un capteur d'activation (10) sensible magnétiquement, le dispositif d'affichage de maintenance (1) étant amené dans l'état d'affichage lorsqu'un champ magnétique provenant d'un aimant permanent pénètre dans le capteur d'activation et dépasse une intensité de champ magnétique prédéfinie.

10. Dispositif d'affichage de maintenance (1) selon l'une des revendications précédentes, le dispositif d'affichage de maintenance (1) étant formé pour stocker une chaîne de bits d'information supplémentaire, la chaîne de bits d'information supplémentaire codant de manière binaire au moins une autre partie des informations de maintenance provenant du composant de l'outil de coupe, la chaîne de bits d'information supplémentaire comportant plusieurs bits d'information supplémentaire, chaque bit d'information supplémentaire présentant un état de bit d'information, le dispositif d'affichage de maintenance (1) étant formé pour clignoter dans l'état d'affichage activé suivant les états de bit d'information de la chaîne de bits d'information supplémentaire et afficher ainsi un signal d'information supplémentaire dans le temps après le signal d'information, le signal d'information supplémentaire pouvant être filmé par l'élément photosensible (6) tout en maintenant l'entrefer (7).

11. Dispositif d'affichage de maintenance (1) selon la revendication 10, le dispositif d'affichage de maintenance (1) étant formé pour afficher de manière répétée le signal d'annonce dans l'état d'affichage activé, le signal d'annonce affiché de manière répétée annonçant le signal d'information supplémentaire.

12. Dispositif d'affichage de maintenance (1) selon l'une des revendications précédentes, le dispositif d'affichage de maintenance (1) étant formé pour stocker une chaîne de bits d'annonce, la chaîne de bits d'annonce comportant plusieurs bits d'annonce, chaque bit d'annonce présentant un état de bit d'annonce, le dispositif d'affichage de maintenance (1) étant formé pour afficher le signal d'annonce dans l'état d'affichage activé en ce que le dispositif d'affichage de maintenance (1) clignote suivant les états de bit d'annonce de la chaîne de bits d'annonce.

13. Dispositif d'affichage de maintenance (1) selon l'une des revendications précédentes, le dispositif d'affichage de maintenance (1) étant formé pour afficher le signal d'information au moins en partie dans la plage de longueurs d'onde visibles dans l'état d'affichage activé.

14. Dispositif d'affichage de maintenance (1) selon l'une des revendications précédentes, le dispositif d'affichage de maintenance (1) étant formé pour afficher le signal d'annonce au moins en partie dans la plage de longueurs d'onde visibles dans l'état d'affichage activé.

15. Dispositif d'affichage de maintenance (1) selon l'une des revendications précédentes, le dispositif d'affichage de maintenance (1) comportant un capteur d'accélération (9), le capteur d'accélération (9) étant formé et disposé pour détecter une accélération de rotation et/ou une accélération linéaire, l'accélération se situant, en valeur absolue, dans la plage de 15 m/s² à 7500 m/s², le dispositif d'affichage de maintenance (1) étant formé et disposé de telle manière que le dispositif d'affichage de maintenance (1) génère l'au moins une partie des informations de maintenance sur la base d'une accélération minimale détectée par le capteur d'accélération (9), le capteur d'accélération (9) étant intégré dans une masse plastique, le dispositif d'affichage de maintenance (1) comportant la masse plastique.
